# EUROPÄISCHE PATENTSCHRIFT

(11) **EP 0 893 628 B1**
(45) Veröffentlichungstag und Bekanntmachung des Hinweises auf die Patenterteilung: **07.11.2001**
(21) Anmeldenummer: 98111484.6
(22) Anmeldetag: 23.06.1998
(51) Int. Cl.: F16H 63/20, F16H 61/24, F16H 61/18

(54) **Schaltvorrichtung für Wechselgetriebe von Kraftfahrzeugen**
Gear-shift device for motor-vehicle gearboxes
Dispositif de changement de vitesse pour les boîtes de vitesses de véhicules

(30) Priorität: 26.07.1997 DE 19732253
(43) Veröffentlichungstag der Anmeldung: 27.01.1999
(73) Patentinhaber: Ford Global Technologies, Inc., A subsidiary of Ford Motor Company, Dearborn, Michigan 48126 (US)
(72) Erfinder: Frankenberg, Dietmar, 50829 Koeln (DE); Schultheiss, Ralf, 50732 Koeln (DE); Fuchs, Anton, 95444 Bayreuth (DE)
(74) Vertreter: Messulam, Alec Moses

(56) Entgegenhaltungen:
- DE-A- 2 912 614
- DE-C- 4 443 523
- DE-C- 19 524 073
- US-A- 1 807 779
- US-A- 1 946 750
- US-A- 3 541 879
- US-A- 4 666 023

## Beschreibung

Die Erfindung bezieht sich auf eine Schaltvorrichtung für Wechselgetriebe von Kraftfahrzeugen, der im Oberbegriff des Patentanspruchs 1 erläuterten Art.

Aus der DE 195 24 073 C1 ist eine Schaltvorrichtung für ein Wechselgetriebe von Kraf fahrzeugen der im Oberbegriff des Patentanspruchs 1 erläuterten Art bekannt.

Bei dieser bekannten Schaltvorrichtung ist eine spezielle Schaltführung mit paarweisen, keilförmigen Sperrzähnen vorgesehen, die zwischen einander benachbarten Schaltarmen von Schaltgabeln anliegen, um eine entsprechend genaue Führung dieser Schaltarme bereitzustellen.

Die bekannte Schaltvorrichtung weist den Nachteil auf, daß für die Schaltführung zwei Führungsleisten erforderlich sind, um die Schaltführung im Getriebegehäuse festzulegen.

Die Aufgabe der Erfindung ist es, eine Schaltvorrichtung für Wechselgetriebe von Kraftfahrzeugen der im Oberbegriff des Patentanspruchs 1 erläuterten Art derart zu verbessern, daß mit einem wesentlich geringeren Platzbedarf und Bauaufwand eine genaue Führung der nahe beieinander liegenden Schaltarme von Schaltgabeln bereitgestellt werden kann. Darüber hinaus soll auch das erforderliche Sperrelement unmittelbar im Bereich der Führungen für die Schaltarme angeordnet werden, so daß durch die Vermeidung von Toleranzsummierungen die Genauigkeit der gesamten Schaltvorrichtung wesentlich verbessert wird.

Gemäß der Erfindung wird diese Aufgabe gelöst, indem eine Schaltvorrichtung für Wechselgetriebe von Kraftfahrzeugen der im Oberbegriff des Patentanspruchs 1 erläuterten Art die im Kennzeichenteil des Patentanspruchs 1 aufgezeigten Merkmale aufweist.

Dadurch, daß die Schaltführang in Form einer im wesenthichen ebenen Blechplatte ausgeführt ist, der Schaltfinger unmittelbar in einer Schaltkulisse mit durch Schlitzen gebildeten Schaltgassen geführt ist und die Schaltarme der Schaltgabeln mit entsprechenden Vorsprüngen gleichfalls unmittelbar in den Schlitzen der Schaltkulisse geführt werden, wird mit einem minimalen Platzbedarf und Bauaufwand eine Schaltvorrichtung geschaffen, bei der die miteinander zusammenwirkenden Bauteile wie Schaltfinger, Schaltarme und ein Sperrelement von der gleichen Schaltkulisse geführt werden, so daß unerwünschte Toleranzsummierungen, die sich ergeben wenn miteinander zusammenwirkende Bauteile von unterschiedlichen Führungsteilen geführt werden, vermieden werden.

In den weiteren Patentansprüchen sind zweckmäßige Ausgestaltungen der Erfindung näher erläutert.

Die Erfindung wird in Zusammenhang mit einem in den beiliegenden Zeichnungen gezeigten Ausführungsbeispiel näher erläutert, es zeigt:
- Fig.1: einen vertikalen, schematischen Teilschnitt durch ein Schaltungsgehäuse mit der erfindungsgemäßen Schaltvorrichtung;
- Fig.2: eine Ansicht der Schaltvorrichtung in Richtung des Pfeiles II in Fig. 1;
- Fig.3: zeigt eine ähnliche Ansicht wie Fig. 2 bei Neutralstellung der Schaltvorrichtung;
- Fig. 4: zeigt die Ansicht nach Fig. 3 bei einer Cross-Schaltung vom 4. in den 5. Gang und
- Fig. 5: zeigt die Ansicht der Schaltvorrichtung nach erfolgter Schaltung in den 5. Gang.

In einem nur schematisch dargestellten Schaltungsgehäuse 1 ist eine Schaltwelle 2 zur Vorwahl von Schaltgassen axial verschiebbar und zum Einrücken der Gänge verschwenkbar.

Auf der Schaltwelle 2 ist über eine Schaltfingernabe 3 ein sich radial erstreckender Schaltfinger 4 und ein Rastensegment 5 axial und drehfest angeordnet. Der Schaltfinger 4 weist einen Schaltfingerkopf 6 auf, der in bekannter Weise eine besondere Kontour aufweist, die es ihm ermöglicht mit entsprechenden Nuten 7, 8 und 9 von Schaltarmen 10, 11 und 12 von Schaltgabeln (nicht gezeigt) zusammenzuwirken, um diese bei einem Verschwenken der Schaltwelle 2 axial zu verlagern.

In der hauptsächlichen Bewegungsebene des Schaltfingerkopfes 6 ist eine Schaltkulisse 13 in Form einer im wesentlichen ebenen Blechplatte angeordnet und im Schaltungsgehäuse 1 in nicht näher dargestellter Weise befestigt. Die Schaltkulisse 13 weist in herkömmlicher Weise eine Vielzahl von durch Schlitze 14, 15 und 16 gebildete Schaltgassen für die entsprechenden Gangstufen auf.

Die Schaltkulisse 13 ist im Bereich ihrer Neutrallage mit einer Absenkung 17 versehen, deren Breite der Kopfweite des Schaltfingerkopfes 6 entspricht. In dieser Absenkung 17 sind die beiden freien Enden 18 und 19 eines Sperrelementes 20 angeordnet, das über Laschen 21 und 22 mit der Schaltwelle 2 derart verbunden ist, daß das Sperrelement 20 eine Axialbewegung der Schaltwelle 2 mit ausführt. Eine drehfeste Verbindung zwischen der Schaltwelle 2 und dem Sperrelement 20 besteht nicht und dementsprechend wird das Sperrelement 20 in der Absenkung 17 während einer Verdrehung der Schaltwelle 2 gegen Verdrehung festgehalten.

An der Schaltkulisse 13 ist um einen Bolzen 23 ein Schwenkarm 24 drehbar angeordnet, der in an sich bekannter Weise eine versehentliche Rückschaltung vom 5. Gang unmittelbar in den in der gleichen Schaltgasse liegenden Rückwärtsgang vermeidet. Eine Cross-Schaltung vom 5. Gang zum 4. Gang wird sicher zugelassen. Ein Einrücken des Rückwärtsganges ist nur aus einer Bewegung des Schaltfingers 6 aus der Neutrallage der Schaltkulisse 13 heraus möglich.

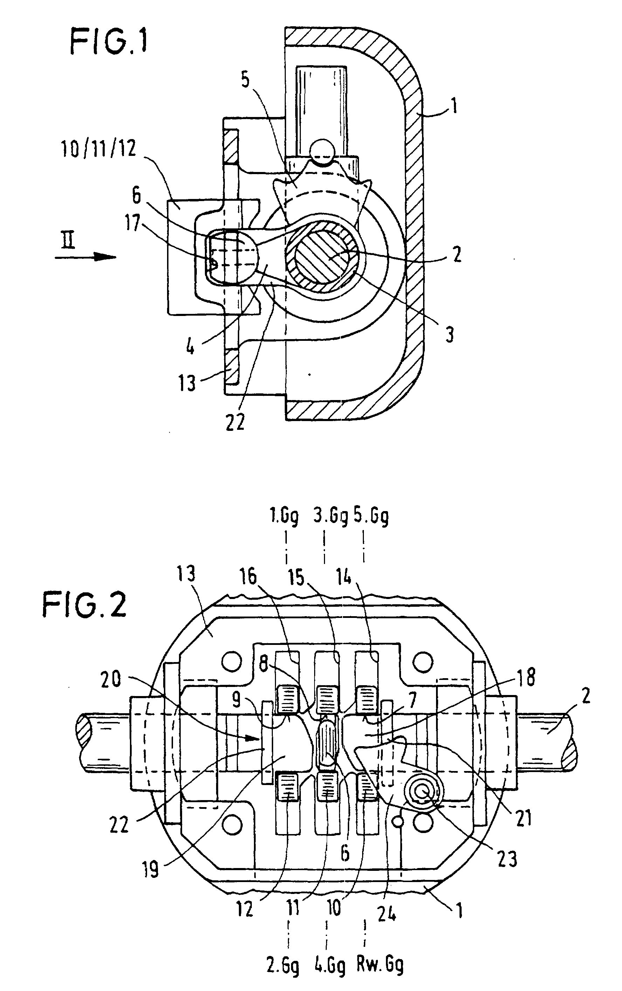

Das in Fig. 1 ersichtliche Nockensegment 5 wirkt in an sich bekannter Weise mit einer im Schaltgehäuse 1 lagefest angeordneten Kugelraste zusammen, deren Aufbau und Funktion herkömmlicher Art ist und die daher hier nicht im einzelnen erläutert wird.

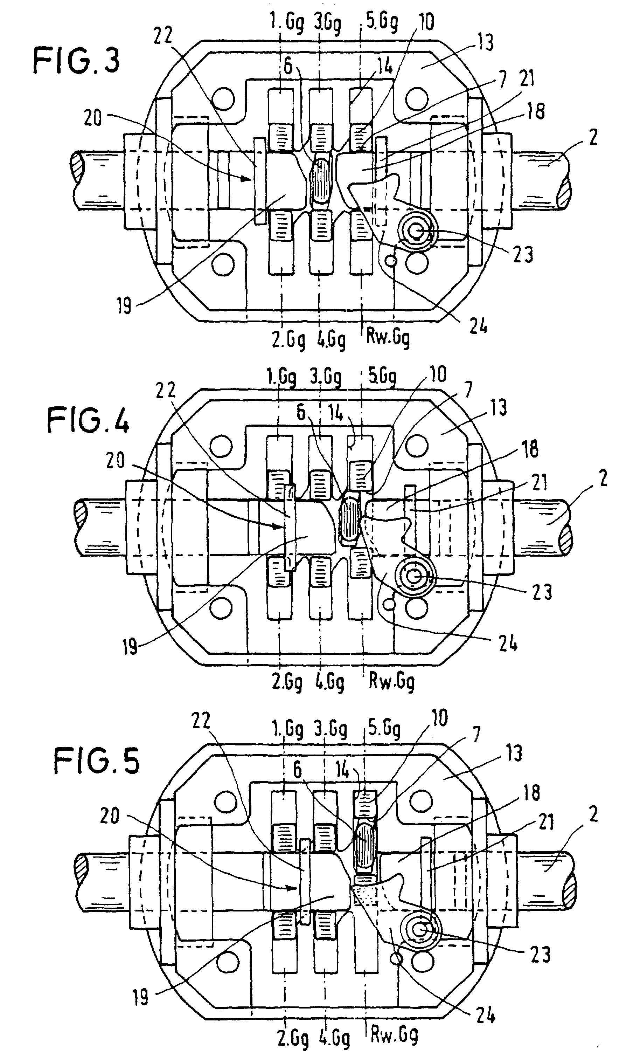

In den Fig. 3 bis 5 sind Ansichten der erfindungsgemäßen Schaltvorrichtung gezeigt, in der nur die zur Erläuterung notwendigen Bezugszeichen eingetragen sind.

In Fig. 3 ist hierbei die Schaltwelle 2 mit dem Schaltkopf 6 ihres Schaltfingers 4 in ihrer Neutrallage in der Schaltkulisse 13 im Bereich der Schaltgasse des 3. und 4. Ganges gezeigt.

Wie aus der Zeichnung ersichtlich ist, sind die freien Enden 18 und 19 des Sperrelementes 20 mit entsprechenden Abschrägungen versehen, die zusammen mit entsprechenden Abschrägungen an der Schalkulisse ein sogenanntes Cross-Schalten, d.h. ein Schalten von einer Schaltgasse kommend in die daneben liegende Schaltgasse, erleichtern. Derartige Abschrägungen sind dem Fachmann geläufig und nicht Gegenstand der Erfindung.

Aus Fig. 4 wird ersichtlich, daß sich der Schaltfingerkopf 6 bereits aus der Schaltgasse für den 3. und 4. Gang herausbewegt hat und in Richtung der Schaltgasse für den 5. Gang und den Rückwärtsgang ist. Es wird darauf hingewiesen, daß wie ersichtlich ist hierbei dem Schaltfingerkopf 6 die beiden freien Enden 18 und 19 des Sperrelementes 20 folgen. Der entsprechende Schaltarm 10, der über die Nut 7 vom Schaltfingerkopf 6 ausgewählt und beaufschlagt wird hat sich bereits um ein geringes Maß in Richtung Einrücken des 5. Ganges bewegt.

Aus Fig. 5 ist die eingerückte Stellung des Rückwärtsganges ersichtlich, bei der sich der Schaltarm 10 bereits bis ans Ende des Schlitzes 14 in der Schaltkulisse 13 bewegt hat.

Durch eine aufeinanderfolgende Betrachtung der Fig. 3, 4 und 5 ist gut ersichtlich wie bei einer Cross-Schaltung vom 4. Gang zum 5. Gang der Schwenkhebel 24 und der Bolzen 23 verschwenkt wird und wie dieser nach Einrücken des 5. Ganges in federbelasteter Weise in eine Stellung zurückfällt, in der er ein unmittelbares Durchschalten vom 5. Gang in den Rückwärtsgang unterbindet. Erst nachdem sich der Schaltfingerkopf 6 in der Neutrallage der Schaltkulisse 13 nach links in den Bereich der Schaltgasse für den 3. und 4. Gang bewegt hat, kann aus einer Bewegung aus der Neutrallage kommend nach rechts durch Wegschwenken des Schwenkhebels 24 ein Einrücken des Rückwärtsganges erfolgen.

Der Vollständigkeit halber wird noch darauf hingewiesen, daß obwohl die in den Zeichnungen gezeigte Ausführungsform eine im wesentlichen ebene Schaltkulisse 13 zeigt, die Lehre der vorliegenden Erfindung jedoch auch angewendet werden kann bei einer Schaltkulisse, die in Form eines Teilzylinders konzentrisch zur Schaltwelle 2 liegend angeordnet ist. Die entsprechende Anpassung des Schaltfingerkopfes 6 und der Schaltarme 10, 11 und 12, die dann fächerförmig zueinander liegen, ist hierbei dem Fachmann ohne besonderen Aufwand möglich.

Obwohl die Erfindung im Zusammenhang einer Schaltvorrichtung beschrieben wurde, bei der die Schaltwelle zum Vorwählen von Schaltgassen axial und zum Einrücken der Gänge radial bewegt wird, ist es selbstverständlich, daß die Erfindung auch bei Schaltvorrichtungen angewendet werden kann, bei denen die Schaltwelle zum Vorwählen von Schaltgassen radial und zum Einrücken von Gängen axial bewegt wird.

## Patentansprüche

1. Schaltvorrichtung für Wechselgetriebe von Kraftfahrzeugen, mit einer in einem Schaltungsgehäuse (1) gelagerten, zur Vorwahl der Schaltgasse axial verschiebbaren und zum Einlegen der Gänge verschwenkbaren Schaltwelle (2), mit einem auf der Schaltwelle (2) angeordneten Schaltfinger (4), der mit seinem Schaltfingerkopf (6) in Nuten (7, 8 und 9) von parallel- oder fächerförmig zueinander angeordneten Schaltarmen (10, 11 und 12) eingreift, um jeweils eine der mit einem Schaltarm verbundenen Schaltgabeln auszuwählen und zu betätigen, wobei eine lagefeste Schaltführung die einzelnen Schaltarme (10, 11 und 12) in einzelne Schaltgassen (14, 15, 16) voneinander trennt und führt, wobei der Schaltfinger (4) mit seinem Schaltfingerkopf (6) unmittelbar in den gleichen Schaltgassen (14,15,16) wie die Schaltarme (10, 11 und 12) geführt ist, und wobei in der Schaltkulisse (13) auch ein Sperrelement (20) geführt ist,
**dadurch gekennzeichnet, daß**
die Schaltführung ausgeführt ist als eine im Schaltungsgehäuse (1) befestigte Schaltkulisse (13) in Form einer im wesentlichen ebenen Blechplatte.

2. Schaltvorrichtung für Wechselgetriebe von Kraftfahrzeugen nach Anspruch 1,
**dadurch gekennzeichnet, daß**
das Sperrelement (20) mit seinen freien Enden (18 und 19) in der Wählgasse der Kulisse in einer Absenkung (17) der Schaltkulisse (13) geführt ist und über Laschen (21 und 22) mit der Schaltwelle (2) derart verbunden ist, daß es eine axiale Bewegung der Schaltwelle (2) mit ausführt, eine Verdrehung der Schaltwelle (2) jedoch nicht mitmacht.

## Claims

1. Gear-shift device for motor vehicle gearboxes, with a shift shaft (2) arranged in gear-shift housing (1), which can be axially displaced for the purpose of pre-selecting the gear path and swivelled for the purpose of engaging the gears, with a shift finger (4) arranged on the shift shaft (2), which with its shift finger head (6) engages in grooves (7, 8 and 9) of shift arms (10, 11 and 12) arranged parallel or fan-form to each other, in order to select and activate one of the shift forks connected with a shift arm, wherein a fixed shift guide separates the individual shift arms (10, 11 and 12) from each other into individual shift paths (14, 15, 16) and guides them, wherein the shift finger (4) with its shift finger head (6) is guided directly in the same shift paths (14, 15, 16) as the shift arms (10, 11 and 12), and wherein in the selector gate a locking element (20) is also guided,
**characterised in that**
the shift guide is designed as a selector gate (13) secured in the gear-shift housing (1) in the form of an essentially even metal plate.

2. Gear-shift device for motor vehicle gearboxes according to Claim 1,
**characterised in that**
the locking element (20) is guided with its free ends (18 and 19) in the selection path of the selector gate in a depression (17) of the shift slide (13) and is connected through tabs (21 and 22) with the shift shaft (2) in such a way that it carries out an axial movement of the shift shaft (2) but does not carry out rotation of the shift shaft (2).

## Revendications

1. Dispositif de changement de vitesses pour boîtes de vitesses de véhicules, muni d'un levier de commande de changement de vitesses (2), placé dans un carter de boîte de vitesses (1), déplaçable axialement pour la présélection de la voie de passage des vitesses et pivotant pour le passage des vitesses, muni d'un doigt de fourchette de commande (4) placé sur le levier de commande de changement de vitesses (2), doigt qui a prise, avec sa tête, dans les rainures (7, 8, et 9) de bras de commutation (10, 11 et 12) placés parallèlement ou en éventail les uns par rapport aux autres pour sélectionner respectivement des fourchettes de commande de vitesses reliées à un bras de commutation et l'actionner, une coulisse de commutation stationnaire séparant et guidant chaque bras de commutation (10, 11 et 12) dans chaque voie de passage de vitesses (14, 15, 16), le doigt de fourchette de commande (4) étant guidé directement avec sa tête (6) dans les mêmes voies de passages de vitesses (14, 15, 16) que les bras de commutation (10, 11 et 12), et un élément de blocage (20) étant aussi guidé dans la coulisse de guidage (13), **caractérisé en ce que** la coulisse de commutation est exécutée comme une coulisse de guidage (13) fixée dans le carter de la boîte de changement de vitesses (1) sous forme de plaque de tôle essentiellement plane.

2. Dispositif de changement de vitesses pour boîtes de vitesses de véhicules selon la revendication 1, **caractérisé en ce que** l'élément de blocage (20) est guidé, avec ses extrémités libres (18 et 19), dans la voie de passage de vitesses sélectionnée de la coulisse, dans un abaissement (17) de la coulisse de guidage (13) et raccordé au levier de commande de changement de vitesses (2) à l'aide de colliers de fixation (21 et 22) de telle sorte qu'il réalise un mouvement axial du levier de commande de changement de vitesses (2), mais qu'il n'exécute pas de rotation du levier de commande de changement de vitesses (2).
